# EUROPÄISCHE PATENTSCHRIFT

(11) **EP 3 535 379 B1**
(45) Veröffentlichungstag und Bekanntmachung des Hinweises auf die Patenterteilung: **22.03.2023**
(21) Anmeldenummer: 17801023.7
(22) Anmeldetag: 02.11.2017
(51) Int. Cl.: C12C 3/12, C12C 7/26

(54) **VERFAHREN ZUM ISOMERISIEREN VON BESTANDTEILEN EINES HOPFENSUBSTRATS IN EINEM BIERBEREITUNGSVERFAHREN, ENTSPRECHENDE VORRICHTUNG UND VERWENDUNG DES ISOMERISATS**
PROCESS FOR ISOMERIZATION OF CONSTITUENTS OF A HOPS SUBSTRATE IN A BEER PREPARATION METHOD, CORRESPONDING APPARATUS AND USE OF THE ISOMERISATE
PROCÉDÉ D'ISOMÉRISATION DE CONSTITUANTS D'UN SUBSTRAT DE HOUBLON DANS UN PROCÉDÉ DE BRASSAGE DE LA BIÈRE, DISPOSITIF CORRESPONDANT ET UTILISATION DE L'ISOMÉRISAT

(30) Priorität: 03.11.2016 DE 102016121014
(43) Veröffentlichungstag der Anmeldung: 11.09.2019
(73) Patentinhaber: ZIEMANN HOLVRIEKA GmbH, 71636 Ludwigsburg (DE)
(72) Erfinder: GEHRIG, Klaus, 71640 Ludwigsburg (DE); WASMUHT, Klaus Karl, 91792 Ellingen (DE); BECHER, Tobias, 71701 Schwieberdingen (DE); ZILLER, Konstantin, 71638 Ludwigsburg (DE); BENNINGHAUS, Tom, 70178 Stuttgart (DE)
(74) Vertreter: Kuhnen & Wacker Patent- und Rechtsanwaltsbüro PartG mbB
(86) Internationale Anmeldenummer: PCT/EP2017/078037
(87) Internationale Veröffentlichungsnummer: WO 2018/083165

(56) Entgegenhaltungen:
- BE-A3- 1 020 238
- DE-A1-102007 062 948
- DE-A1-102009 023 247
- DE-A1-102010 045 492

## Beschreibung

### Technisches Gebiet

Die vorliegende Erfindung betrifft ein Verfahren zum Isomerisieren von Bestandteilen eines Hopfensubstrats in einem Bierbereitungsverfahren nach Anspruch 1, eine Verwendung des erhaltenen Isomerisats nach Anspruch 5, und eine Vorrichtung zum Isomerisieren von Bestandteilen eines Hopfensubstrats in einem Bierbereitungsverfahren nach Anspruch 7.

### Stand der Technik

In herkömmlichen Bierbrauverfahren erfolgt die Hopfung üblicherweise durch Zugabe von Hopfen oder eines Hopfenproduktes zur Würze während der Würzekochung. Darüber hinaus sind Bierbrauverfahren bekannt, bei denen die Isomerisierung der Hopfenbestandteile nicht mit der Würze in der Sudpfanne, sondern separat in einem Fluid bei gegenüber der Kochtemperatur der Würze erhöhten Temperaturen stattfindet. Der derart vorisomerisierte Hopfen wird dann der Würze beispielsweise am Ende der Würzekochung in die Sudpfanne zugeführt. Eine separate Isomerisierung von Hopfenprodukten ist beispielsweise aus der Offenlegungsschrift DE 10 2007 062 948 A1 bekannt.

Wenn jedoch eine Isomerisierung der Hopfenbestandteile auf die vorstehend beschriebene Weise vorgenommen wird, findet zwar eine schnelle und weitgehende Isomerisierung von Bestandteilen des Hopfensubstrats statt. Jedoch ist die thermische Belastung des isomerisierten Hopfensubstrats hoch, was sich insgesamt bspw. durch sich bildende Nebenprodukte negativ auf die Qualität der Hopfung auswirkt.

Ferner tritt beim herkömmlichen Verfahren wie vorstehend beschrieben häufig das Problem der Anreicherung von unerwünschten Hopfenaromastoffen im isomerisierten Hopfensubstrat auf, welche sich nachteilig auf die Qualität der resultierenden Biere auswirken.

Gattungsgemäße Isomerisierungsbehälter sind dem Fachmann ferner aus den Druckschriften DE 10 2007 062 948 A1 und DE 10 2010 045 492 A1 bekannt.

### Aufgabe der Erfindung

Es ist folglich eine Aufgabe der vorliegenden Erfindung, ein Verfahren bzw. eine Vorrichtung bereitzustellen, welches bzw. welche die Qualität eines in einem Bierbereitungsverfahren verwendbaren Hopfensubstrats mit isomerisierten Hopfenbestandteilen verbessert, vorzugsweise unter Erzielung eines hohen Isomerisierungsgrades der Hopfenbestandteile.

### Definitionen

Im Rahmen der vorliegenden Anmeldung wird unter "Bierbereitungsverfahren" ein Verfahren zum Herstellen eines Bieres einschließlich eines alkoholfreien Bieres oder eines bierhaltigen oder bierähnlichen Getränks oder einer Vorstufe derselben verstanden. Dies schließt folglich auch ein Verfahren zum Zubereiten einer Bierwürze (Bierwürzebereitungsverfahren) mit ein. Ferner kann "Bierbereitungsverfahren" auch ein Verfahren zum Herstellen eines beliebigen Getränks umfassen, insbesondere, wenn zur Herstellung des Getränks ein zum Bierbrauen verwendbarer Rohstoff verwendet wird und/oder das Getränk mit der üblichen Brauereiausstattung hergestellt werden kann, wie beispielsweise malzbasierte Getränke oder Softdrinks.

"Hopfensubstrat" ist ein Substrat oder eine Mischung aus Substraten, ausgewählt aus der Gruppe, die umfasst: Hopfen, vorzugsweise Naturhopfen; Hopfenprodukt, vorzugsweise Hopfenpellets, Hopfenextrakt, oder ein sonstiges Substrat, das isomerisierbare Hopfenbestandteile, vorzugsweise wenigstens eine α-Säure und/oder wenigstens eine β-Säure, aufweist.

"Isomerisierungssubstrat" ist ein wässeriges Fluid oder eine wässerige Suspension, ausgewählt aus der Gruppe, die umfasst: Wasser, (Bier-)Maische, (Bier-)Würze, einschließlich Vorderwürze, Pfanne-voll-Würze, Nachguss bzw. Nachgussablauf, Glattwasser, oder Mischungen, Verdünnungen oder Konzentrate der genannten Substrate, jeweils insbesondere aus dem Bierbereitungsverfahren.

"Läuterwürze" umfasst: Vorderwürze, Pfanne-voll-Würze, Nachguss bzw. Nachgussablauf, Glattwasser, oder Mischungen, Verdünnungen oder Konzentrate der genannten Substrate, jeweils insbesondere aus dem Bierbereitungsverfahren.

Unter "thermischer Behandlung" der Würze im Sinne dieser Anmeldung wird ein Heißhalten der Würze oberhalb von 85 °C oder Kochen der Würze verstanden, dessen Dauer vorzugsweise 40 bis 120 min, insbesondere 50 bis 90 min, ist. Die thermische Behandlung beginnt beim Erwärmen der bei der Läuterung gewonnenen Würze, insbesondere der Pfanne-voll-Würze, und endet zumeist beim Ausschlagen der Würze aus der Würzepfanne. Nachgelagerte Verfahrensschritte, welche keinen oder keinen nennenswerten Wärmeeintrag in die Würze umfassen, wie beispielweise die herkömmliche Trubabscheidung im Whirlpool oder ein Strippen der Würze ohne Nacherwärmen, sind nicht Teil der thermischen Behandlung.

"Ausdampfen" meint das Freisetzen eines Dampfes oder eines Aerosols aus dem Isomerisierungssubstrat oder aus einem Gemisch enthaltend das Isomerisierungssubstrat, was auf ein Verdampfen und/oder ein Verdunsten einer Flüssigkeit bei oder unterhalb der Siedetemperatur derselben zurückzuführen ist.

"Zwischen- oder Enderzeugnis des Bierbereitungsverfahrens" umfasst: (Bier-)Maische, (Bier-)Würze, einschließlich Vorderwürze, Nachguss bzw. Nachgussablauf, Glattwasser, Pfanne-voll-Würze, Ausschlagwürze, geklärte Würze oder Würze nach dem Whirlpoolschritt, Kaltwürze, belüftete Würze, Anstellwürze, Grünbier, Jungbier, gärendes Bier, endvergorenes Bier, Bier im Stadium der Reifung oder Lagerung; filtriertes Bier; Drucktankbier, abgefülltes Bier, voll- oder teilentalkoholisiertes Bier, Biermischgetränk oder beliebige Mischungen derselben.

Das "Einstellen der Temperatur TG des in Schritt (a) erhaltenen Gemischs G auf eine Temperatur innerhalb eines Temperaturbereichs TB" umfasst das Erwärmen und das Abkühlen des Gemischs G auf eine Temperatur innerhalb des Temperaturbereichs TB. Es umfasst aber auch das Halten oder Belassen der Temperatur TG des Gemischs G, wenn das Gemisch G bereits beim oder nach dem Mischen im Schritt (a) eine Temperatur innerhalb des Temperaturbereichs TB aufweist und daher keine Änderung der Temperatur TG im Schritt (b) erforderlich ist. Analoges gilt für das Vorrichtungsmerkmal "Einrichtung zum Einstellen der Temperatur TG des Gemischs G".

### Zusammenfassung der Erfindung

Die Aufgabe wird durch das erfindungsgemäße Verfahren gemäß Anspruch 1 gelöst. Vorteilhafte Ausführungsformen des erfindungsgemäßen Verfahrens sind Gegenstand der abhängigen Ansprüche.

So wird ein Verfahren zum Isomerisieren von Bestandteilen eines Hopfensubstrats in einem Bierbereitungsverfahren, wobei das Bierbereitungsverfahren eine Erzeugung und eine thermische Behandlung einer Würze W einschließt, offenbart, mit den Schritten:
(a) Mischen des Hopfensubstrats mit einem Isomerisierungssubstrat I unter Erhalt eines Gemischs G;
   wobei das Hopfensubstrat H wenigstens einen isomerisierbaren Hopfenbestandteil, vorzugsweise wenigstens eine α-Säure, enthält;
   wobei das Isomerisierungssubstrat I eine Läuterwürze enthält oder daraus besteht;
   wobei das Isomerisierungssubstrat I einen Extraktgehalt im Bereich von 0,2 bis 8 °P, vorzugsweise von 0,5 bis 5 °P; insbesondere von 0,8 bis 3 °P, aufweist; und
   wobei das Isomerisierungssubstrat I einen pH-Wert von wenigstens 5,6, vorzugsweise wenigstens 7,0, aufweist;
(b) Einstellen einer Temperatur TG des in Schritt (a) erhaltenen Gemischs G auf eine Temperatur innerhalb eines Temperaturbereichs TB, welcher die Temperaturen von 15 °C unterhalb bis 2 °C, vorzugsweise von 15 °C unterhalb bis 5 °C, unterhalb einer Temperatur TMAX umfasst, welche die Würze W während der thermischen Behandlung derselben im Bierbereitungsverfahren höchstens erreicht;
(c) Halten der Temperatur TG des in Schritt (b) erhaltenen Gemischs G für eine vorbestimmte Zeitdauer tI innerhalb des Temperaturbereichs TB;
   wobei die Zeitdauer tI um 20 bis 50 min länger, vorzugsweise 20 bis 45 min länger, ist als eine Zeitdauer tK der thermischen Behandlung der Würze W im Bierbereitungsverfahren (als Formel ausgedrückt: tI = tK + (20 bis 50 min) = tK + 20 min bis tK + 50 min); und
(d) vorzugsweise wenigstens teilweises Abtrennen von Feststoffen aus dem in Schritt (c) erhaltenen Gemisch G.

Dabei beträgt in Schritt (c) die Zeitdauer tK der thermischen Behandlung vorzugsweise 40 bis 120 min, insbesondere 50 bis 90 min. Folglich beträgt die Zeitdauer tI des Haltens der Temperatur TG des in Schritt (b) erhaltenen Gemischs G vorzugsweise 60 bis 150 min, insbesondere 70 bis 135 min.

Erfindungsgemäß erstreckt sich folglich der in Schritt (b) genannte Temperaturbereich TB der Temperatur des Gemisches G auf einen Bereich von 15 °C unterhalb der höchsten Temperatur TMAX, welcher die Würze W während der thermischen Behandlung ausgesetzt ist, bis 2 °C unterhalb dieser höchsten Temperatur TMAX. Als Formel ausgedrückt: TB = (TMAX - 15 °C) bis (TMAX - 2 °C). Als erläuterndes Beispiel kann hinzugefügt werden: Entspricht die höchste Temperatur TMAX, welcher die Würze während der thermischen Behandlung ausgesetzt ist, beispielsweise einer Würzekochtemperatur von 100 °C, so erstreckt sich der Temperaturbereich TB zwischen (100 - 15) °C und (100 - 2) °C = 85 bis 98 °C.

Erfindungsgemäß wird folglich die Temperatur TG des Gemisches G aus dem Hopfensubstrat H und dem Isomerisierungssubstrat I unterhalb einer Temperatur TMAX gehalten, welche die Würze während der thermischen Behandlung derselben im Bierbereitungsverfahren höchstens erreicht. Letztere ist üblicherweise die Heißhalte- oder die Kochtemperatur der Würze. Aufgrund der gegenüber der herkömmlichen Würze- und Hopfenbehandlung und insbesondere gegenüber bekannten Hochtemperatur-Schnellisomerisierungsverfahren (mit T = ca. 120 °C) abgesenkten Temperatur TG läuft die Isomerisierung erfindungsgemäß schonender ab und die thermische Belastung ist geringer, was sich beispielsweise in einem geringeren Anstieg der Thiobarbitursäurezahl (TBZ) ausdrückt. Dies bedeutet auch eine schonendere Behandlung des Hopfenaromas, was sich positiv auf die Qualität des resultierenden Isomerisats auswirkt.

Darüber hinaus ist der Energiebedarf des vorgeschlagenen Verfahrens aufgrund der abgesenkten Temperatur TG geringer.

Die aufgrund der abgesenkten Temperatur TG geringere Isomerisierungsgeschwindigkeit wird im erfindungsgemäßen Verfahren durch eine um wenigstens 20 Minuten gegenüber der herkömmlichen thermischen Behandlung verlängerten Isomerisierungsdauer tI kompensiert, so dass beim Isomerisierungsgrad bzw. bei der Isomerisierungsausbeute keine Einbußen in Kauf genommen werden müssen. Während die Isomerisierungsdauer bei der herkömmlichen Würzekochung im Wesentlichen auf die Kochzeit beschränkt ist, wird erfindungsgemäß mit der separaten Behandlung des Hopfensubstrats H unabhängig von der Wärmebehandlung des Würzebatches eine Verlängerung der Isomerisierungsdauer möglich. Somit kann die Isomerisierungsdauer tI völlig unabhängig von der eigentlichen Würzekochung oder -heißbehandlung eingestellt werden. So kann erfindungsgemäß neben der Kochdauer beispielsweise auch die Dauer der Heißtrubabscheidung im Whirlpoolschritt genutzt werden, um parallel die Hopfenisomerisierung voranzutreiben und hierdurch die Ausbeute an isomerisierten Hopfenbestandteilen zu erhöhen. Anders gesagt, gelingt es durch das vorgeschlagene Verfahren, eine optimale Ausbeute an isomerisierten Hopfenbestandteilen, wie α-Säuren, zu erzielen, ohne dass die Temperatur während der Isomerisierung auf die übliche Temperatur während der thermischen Behandlung der Würze W oder sogar darüber angehoben werden muss.

Es ist ferner vorteilhaft, bei der Durchführung der Isomerisierung eine Unterschreitung der im Anspruch definierten, unteren Grenztemperatur des Temperaturbereichs TB zu vermeiden. Hierdurch wird sichergestellt, dass die Isomerisierungsreaktion bis zum Erreichen des gewünschten Isomerisierungsgrades noch in akzeptabler Zeit abläuft. Eine Absenkung der Isomerisierungstemperatur unter die untere Grenztemperatur hätte eine starke Verlangsamung der Isomerisierungsreaktion zufolge, so dass der gewünschte Isomerisierungsgrad in der vorgegebenen Zeit möglichweise nicht erreicht werden kann.

Da erfindungsgemäß die Konzentration des eingesetzten Isomerisierungssubstrats I aufgrund des geringen Extraktgehaltes gering ist, ist der Verlust an wertvollen Hopfenbestandteilen vermindert. Ferner sind die Verluste an wertvollen Bestandteilen, welche im Hopfentrub zurückbleiben, geringer. Nebenbei wird aufgrund der geringeren Menge an Hopfentrub auch ein geringerer Verlust an im Hopfentrub zurückbleibender Würze erzielt, was die letztendlich mit dem Brauverfahren erzielbare Extraktausbeute steigert.

Die Kombination aus im Vergleich zu herkömmlichen Verfahren geringerer Konzentration des eingesetzten Isomerisierungssubstrats I und der abgesenkten Isomerisierungstemperatur wirkt sich positiv auf die Qualität des resultierenden Isomerisats aus, da die thermische Belastung geringer ist.

Besonders vorteilhaft ist, wenn als Isomerisierungssubstrat I ein Nachguss bzw. Nachgussablauf oder ein Glattwasser aus dem herkömmlichen Bierbereitungsverfahren verwendet werden, da diese Substrate sowohl einen geringen Extraktgehalt, als auch einen geringen Feststoffgehalt bzw. eine geringe Partikelfracht beispielsweise im Vergleich zur Vorderwürze desselben Suds aufweisen, was zu geringeren Verlusten an isomerisierten Hopfenbestandteilen führt. Darüber hinaus ist die thermische Belastung geringer, da eine geringere Menge an organischer Fracht im Isomerisierungssubstrat I vorhanden ist. Zudem ist der pH-Wert dieser Substrate relativ hoch, was ebenfalls die Isomerisierung fördert.

Dagegen kann es nach der Beobachtung der Erfinder vorteilhaft sein, wenn das eingesetzte Isomerisierungssubstrat I einen Anteil an Grobpartikeln aufweist, insbesondere, falls im Isomerisierungssubstrat I auch Feinpartikel anwesend sind. Hierbei versteht man unter Grobpartikeln Partikeln mit Partikelgrößen zwischen 40 und 400 µm, vorzugsweise zwischen 40 und 300 µm, insbesondere zwischen 40 und 200 µm. Unter Feinpartikel werden hier Partikel mit einer Partikelgröße von kleiner 40 µm, vorzugsweise von etwa 1 µm bis kleiner 40 µm, verstanden. Dabei wird die Partikelgrößenmessung gemäß der im Anhang aufgeführten Methode durchgeführt.

Die Konzentration der vorstehend definierten Grobpartikel im Isomerisierungssubstrat I kann bei > 100 mg/l, vorzugsweise bei > 200 mg/l, insbesondere bei > 400 mg/l, liegen. Wenn die Grobpartikel im Isomerisierungssubstrat I in einer Menge von > 100 mg/l, vorzugsweise bei > 200 mg/l, insbesondere von > 400 mg/l, vorhanden sind, wurde eine weitere Steigerung der Isomerisierungsausbeute der Hopfenbestandteile, insbesondere der α-Säuren, beobachtet. Vermutlich haben die Grobpartikel im Gegensatz zu den Feinpartikeln aufgrund ihrer geringeren spezifischen Oberfläche eine geringere Affinität zu anderen Substanzen, so dass diese die Hopfenbestandteile weniger binden. Möglicherweise absorbieren die Grobpartikel auch die im Isomerisierungssubstrat I vorhandenen Feinpartikel, so dass die Feinpartikel ihre adsorbierende Wirkung auf die Hopfenbestandteile nicht mehr oder nur vermindert ausüben können.

Vorteilhafte Ausführungsformen des erfindungsgemäßen Verfahrens sind Gegenstand der abhängigen Ansprüche 2 bis 4.

So kann/können das Isomerisierungssubstrat I und/oder das Gemisch G wenigstens während der thermischen Behandlung der Würze W im Bierbereitungsverfahren von der Würze W getrennt sein. Zudem oder alternativ kann/können das Isomerisierungssubstrat I und/oder das Gemisch G wenigstens während einer der Schritte (a) bis (d), vorzugsweise wenigstens während des Schrittes (c), von der Würze W getrennt sein.

Die getrennte Behandlung von Hopfensubstrat H und Würze W erhöht die Flexibilität der Steuerung des Verfahrens bezüglich den während der jeweiligen Behandlung einzustellenden Temperaturen, Konzentrationen, Behandlungsdauern etc.

Ferner kann wenigstens einer der Schritte (a) bis (d), vorzugsweise wenigstens der Schritt (c), in einem separaten Behälter durchgeführt werden, der nicht für die thermische Behandlung der Würze W im Bierbereitungsverfahren verwendet wird.

Durch die räumliche Auftrennung der Behandlungen des Hopfensubstrats H bzw. des Gemischs G und der Würze W in vorrichtungstechnischer Hinsicht ist es möglich, die hierzu verwendeten Behälter optimal dem jeweiligen Einsatzzweck hinsichtlich ihres Volumens und Ausstattung anzupassen.

Zudem kann wenigstens während einer der Schritte (a) bis (d), vorzugsweise wenigstens während des Schrittes (c), das Gemisch G ausdampfen gelassen werden. Dabei kann das Ausdampfen des Gemisches G gegen den Umgebungsdruck oder gegen einen Druck unterhalb des Umgebungsdrucks erfolgen.

Durch die Möglichkeit des Ausdampfens oder Ausdunstens gelingt es, unerwünschte Hopfenbestandteile wie bspw. etherische Öle, insbesondere Myrcen, auf einfache Weise zu entfernen, ohne dass diese später in ein Zwischen- oder Enderzeugnisses ZW des Bierbereitungsverfahrens gelangen.

Durch die im Vergleich zur herkömmlichen Würzekochung verringerte Ausdampfung von Hopfenbestandteilen während der Temperaturbehandlung des Hopfens wird eine selektive Ausdampfung unerwünschter Hopfenbestandteile in einem nachgeschalteten Schritt ermöglicht.

Die erfindungsgemäße Aufgabe wird ferner durch die Verwendung nach Anspruch 5 gelöst.

So wird das aus Schritt (c) oder (d) des Verfahrens nach einem der Ansprüche 1 bis 4 erhaltenen Gemisch G zur Hopfung eines Zwischen- oder Enderzeugnisses ZW des Bierbereitungsverfahrens, vorzugsweise der Würze W, verwendet.

Die in Zusammenhang mit dem erfindungsgemäßen Verfahren vorstehend diskutierten Vorteile gelten bei der hier vorgeschlagenen Verwendung analog und führen zu einer verbesserten Qualität des mit dem Gemisch G beaufschlagten Zwischen- oder Enderzeugnisses ZW.

Wenn in der vorteilhaften Ausführungsform der erfindungsgemäßen Verwendung der Feststoffgehalt des Zwischen- oder Enderzeugnisses ZW des Bierbereitungsverfahrens vor der Zugabe des Gemischs G, vorzugweise durch Sedimentieren, Zentrifugieren oder Filtrieren, verringert wurde oder gering ist, wird der Verlust an isomerisierten Hopfenbestandteilen im Erzeugnis verringert.

So kann das Gemisch G mit den isomerisierten Hopfenbestandteilen einer wärmebehandelten Würze W im Brauverfahren beispielsweise nach dem Whirlpoolschritt zugegeben werden. Die hat den Vorteil, dass die isomerisierten Hopfenbestandteile mit der Würze W erst nach einer Feststoffabreicherung derselben, beispielsweise im Whirlpool, in Kontakt kommen und hierdurch ein Verlust von Iso-α-Säuren durch Adsorption an den Heißtrub vermieden werden kann.

Schließlich wird die Aufgabe durch die Vorrichtung nach Anspruch 7 gelöst. Die Vorteile des erfindungsgemäßen Verfahrens gelten analog für die Vorrichtung.

Dabei wird eine Vorrichtung zum Isomerisieren von Bestandteilen eines Hopfensubstrats H in einem Bierbereitungsverfahren, wobei das Bierbereitungsverfahren eine Erzeugung und eine thermische Behandlung einer Würze W einschließt, vorzugsweise zum Durchführen wenigstens eines der Schritte (a), (b), (c) und (d) des Verfahrens nach einem der Ansprüche 1 bis 4, vorgeschlagen, welche aufweist:
einen Behälter B zur Aufnahme des Hopfensubstrats H, des Isomerisierungssubstrats I und/oder des Gemischs G aus dem Hopfensubstrat H und dem Isomerisierungssubstrat I;
wobei der Behälter B wenigstens eine Einlassöffnung E zum Einbringen des Hopfensubstrats H, des Isomerisierungssubstrats I und/oder des Gemisches G in den Behälter B aufweist;
wobei der Behälter B wenigstens eine Auslassöffnung A zum Ausbringen des Gemisches G aus dem Behälter B aufweist;
ein Dunstrohr D zum Abführen von aus dem Gemisch G stammenden Dampf oder Dunst aus dem Behälter B;
eine Einrichtung WG zum Einstellen und/oder Halten der Temperatur TG des Gemischs G oder des Isomerisierungssubstrats I;
wobei die Einlassöffnung E oder wenigstens eine der Einlassöffnungen E mit einer Läutervorrichtung in Fluidverbindung steht;
wobei die Auslassöffnung A oder wenigstens eine der Auslassöffnungen A mit einem ein Zwischen- oder Enderzeugnis ZW des Bierbereitungsverfahrens führenden, vorzugsweise würze- oder bierführenden, Gefäß L in Fluidverbindung steht, wobei das Gefäß L bezogen auf einen Würzestrom stromabwärts zu einer Einrichtung zum wenigstens teilweisen Abtrennen von Feststoffen aus der Würze W, vorzugweise durch Sedimentieren, Zentrifugieren oder Filtrieren, insbesondere zu einem Whirlpool, angeordnet ist;
wobei der Behälter B oder ein Teil desselben die Gestalt eines Kegels oder Stumpfkegels aufweist, wobei der Öffnungswinkel (α) des Kegels oder Stumpfkegels im Bereich von 15 bis 120 ° liegt.

Dabei schließt die Fluidverbindung zwischen Einlassöffnung und Läutervorrichtung auch ein, dass beispielsweise ein Wärmeüberträger oder eine andere Anlagenkomponente im Strömungsweg zwischen Einlassöffnung E und Läutervorrichtung angeordnet ist. Analoges gilt für die Fluidverbindung zwischen Auslassöffnung A und dem ein Zwischen- oder Enderzeugnis führenden Gefäß.

Vorteilhafte Ausführungsformen der erfindungsgemäßen Vorrichtung sind Gegenstand der abhängigen Ansprüche 8 und 9.

So kann der Behälter B geeignet ist, in seinem Inneren einem Druck unterhalb des Umgebungsdrucks standzuhalten. Zusätzlich kann der Behälter B eine Einrichtung zur Erzeugung eines Drucks unterhalb des Umgebungsdrucks im Inneren des Behälters B aufweisen.

Durch die Möglichkeit, einen Unterdruck auf das Gemisch während der Isomerisierungsdauer einwirken zu lassen, wird die Ausdampfung bzw. Ausdunstung unerwünschter Hopfenbestanteile, insbesondere von Hopfenaromen, verbessert.

Ferner kann der Öffnungswinkel (α) des Kegels oder Stumpfkegels vorzugsweise im Bereich von 45 bis 75 ° liegen. Der Behälter B oder ein Teil desselben kann die Gestalt eines Zylinders oder Zylindrokonus, vorzugsweise mit rundem, elliptischem oder mehreckigem Querschnitt, aufweisen.

Durch das Vorsehen einer konus- oder kegelförmigen Gestalt des Bodens des Behälters B wird das Absetzen der festen Hopfenbestandteile und anderer Feststoffe erleichtert, wodurch eine einfache Trennung zwischen gelösten und ungelösten Hopfenbestandteilen ermöglicht wird und sich somit die Hopfenausbeute weiter steigern lässt.

### Alternativen und weitere Offenbarung der Erfindung

In Schritt (b) des erfindungsgemäßen Verfahrens kann die Temperatur TG des Gemisches auch auf eine Temperatur innerhalb eines der nachfolgenden Temperaturbereiche TB eingestellt werden:
15 °C unterhalb bis 2 °C unterhalb,
vorzugsweise 10 °C unterhalb bis 2 °C unterhalb,
vorzugsweise 12 °C unterhalb bis 3 °C unterhalb,
vorzugsweise 8 °C unterhalb bis 2 °C unterhalb,
vorzugsweise 10 °C unterhalb bis 3 °C unterhalb,
vorzugsweise 15 °C unterhalb bis 5 °C unterhalb,
vorzugsweise 10 °C unterhalb bis 4 °C unterhalb,
vorzugsweise 8 °C unterhalb bis 3 °C unterhalb,
vorzugsweise 7 °C unterhalb bis 3 °C unterhalb,
der Temperatur TMAX, welche eine Würze W während einer thermischen Behandlung derselben im Bierbereitungsverfahren höchstens erreicht.

Der Temperaturbereich TB kann alternativ auch einen der folgenden Bereiche umfassen: 85 bis 98 °C; 85 bis 97 °C; 85 bis 96 °C; 85 bis 95 °C; 88 bis 98 °C; 88 bis 95 °C; 88 bis 94 °C; 90 bis 98 °C; 90 bis 97 °C; 90 bis 96 °C; 90 bis 95 °C; und 92 bis 97 °C.

Erfindungsgemäß kann der Gehalt (Massenanteil) an "Feststoffen" oder "Partikeln" gemäß der Methode MEBAK Band II, 2002, 2.6.2, bestimmt werden.

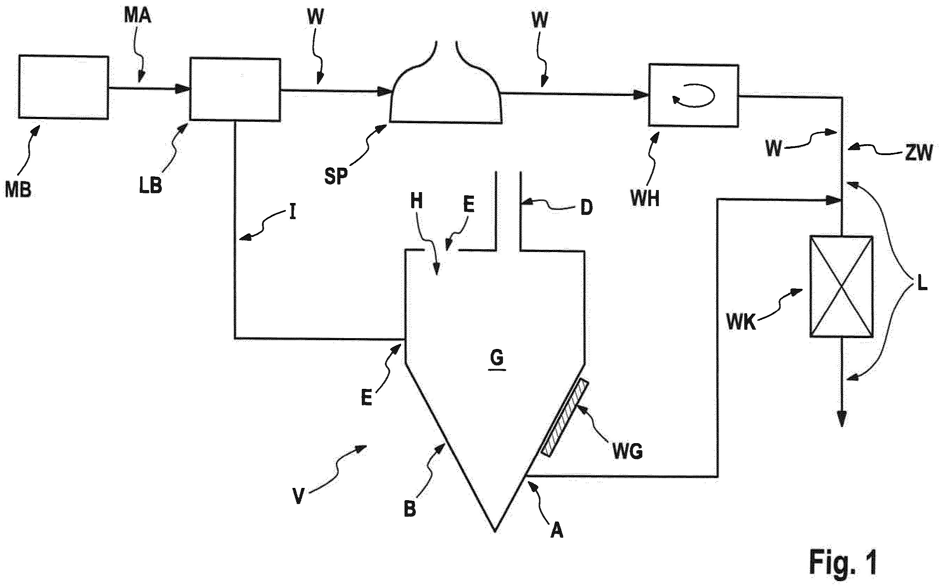

Fig. 1 zeigt eine Brauanlage mit einer Maischvorrichtung MB, einer Läutervorrichtung LB, einer Würzepfanne SP, einem Whirlpool WH, einem Würzekühler WK und einer bevorzugten Ausführungsform der erfindungsgemäßen Vorrichtung V. Dabei weist die Vorrichtung V einen Behälter B zur Aufnahme eines Hopfensubstrats H, eines Isomerisierungssubstrats I und/oder eines Gemischs G aus dem Hopfensubstrat H und dem Isomerisierungssubstrat I auf. Der Behälter B weist zwei Einlassöffnungen E auf, eine zum Einbringen des Hopfensubstrats H und zum Einbringen des Isomerisierungssubstrats I in den Behälter B auf. Ferner weist der Behälter B eine Auslassöffnung A zum Ausbringen des Gemisches G aus dem Behälter B auf. Der Behälter B weist ferner ein Dunstrohr D zum Abführen von aus dem Gemisch G stammenden Dampf oder Dunst aus dem Behälter B auf. Zudem weist der Behälter B eine Einrichtung WG zum Einstellen der Temperatur TG des Gemischs G oder des Isomerisierungssubstrats I auf. Eine der Einlassöffnungen E steht mit der Läutervorrichtung SP in Fluidverbindung. Die Auslassöffnung A steht mit einem ein Zwischen- oder Enderzeugnis ZW des Bierbereitungsverfahrens, hier eine Würze, führendes Gefäß L in Fluidverbindung. Das Gefäß L ist bezogen auf den Würzestrom stromabwärts zum Whirlpool WH angeordnet.

### Ausführungsbeispiel

Erfindungsgemäß ist das Isomerisierungssubstrat I vorzugsweise eine Läuterwürze, insbesondere ein Glattwasser, mit einem pH-Wert > 5,6, insbesondere > 7,0, einer geringen Stammwürze von < 3 °P und einem Feststoffgehalt > 100 mg/L.

In einem Laborversuch wurden 5 L Würze als Isomerisierungssubstrat I auf 98 °C erhitzt und heiß gehalten. Sobald diese Heißhaltetemperatur erreicht war, wurde ein Hopfen in einer Konzentration von 10 g/5 L gegeben, so dass die Würze auf 29,4 Bittereinheiten eingestellt wurde. Die Heißhaltedauer betrug insgesamt 60 min, wobei Rühreinheiten nach 20 min und 40 min erfolgten. Nach Ablauf der Heißhaltedauer wurde eine Probe gezogen und auf Iso-α-Säuren untersucht (HPLC, Methode Forschungszentrum Weihenstephan für Brau- und Lebensmittelqualität).

Parallel dazu wurden 5 L Würze auf 100 °C erhitzt, dieselbe Hopfengabe gegeben und nach Art der konventionellen Würzekochung bei 100 °C (= TMAX) für 40 min atmosphärisch gekocht. Nach Ablauf der Kochdauer wurde auch von diese Würze eine Probe gezogen und auf Iso-α-Säuren nach derselben Methode untersucht.
Der Vergleich der Messergebnisse zeigt, dass die Ausbeute an Iso-α-Säuren bei der erfindungsgemäßen, verlängerten, separaten Isomerisierung bei abgesenkter Temperatur um 85 % erhöht war.

### Anhang

### Messung der Partikelgrößenverteilung

Die Analyse erfolgt mit dem Laserbeugungssensor HELOS der Firma Sympatec GmbH in Kombination mit der automatischen Nassdispergiereinheit SUCELL. Kombiniert hat der Sensor einen Messbereich von 0,1 µm bis 875 µm. Die Auswahl der Linse R4, mit einem Bereich von 0,5/1,8 µm bis 350 µm, dient der weiteren Eingrenzung des Messbereiches. Eine Anregung der Probe erfolgte mit einem HeNe-Laser mit einer Wellenlänge von *λ*=632,8 *nm*. Die Auswertung der Messsignale erfolgt über die geräteeigene Software.

Die zeitliche Abfolge einer Partikelgrößenmessung ist nachfolgend aufgezeigt:
1. Einfüllen von 400 ml entionisiertem Wasser in die Dispergiereinheit
2. 10 s entlüften der Dispergiereinheit
3. 30 s Umpumpen
4. Signaltest (Referenz)
5. Zugabe der Probe mittels Messpipette (bis zu optischer Konzentration von ca. 15 %)
6. 10 s entlüften der Dispergiereinheit
7. 120 s Umpumpen (zur Dispergierung)
8. Messung 1 (Messzeit: 60 s)
9. 60 s Umpumpen
10. Messung 2 (Messzeit: 60 s)
11. 60 s Umpumpen
12. Messung 3 (Messzeit: 60 s)
13. Entleeren und Spülen der Dispergiereinheit

## Patentansprüche

1. Verfahren zum Isomerisieren von Bestandteilen eines Hopfensubstrats (H) in einem Bierbereitungsverfahren, welches eine Erzeugung und eine thermische Behandlung einer Würze (W) einschließt, mit den Schritten:
(a) Mischen des Hopfensubstrats (H) mit einem Isomerisierungssubstrat (I) unter Erhalt eines Gemischs (G);
wobei das Hopfensubstrat (H) wenigstens einen isomerisierbaren Hopfenbestandteil, vorzugsweise wenigstens eine α-Säure, enthält;
wobei das Isomerisierungssubstrat (I) eine Läuterwürze enthält oder daraus besteht;
wobei das Isomerisierungssubstrat (I) einen Extraktgehalt im Bereich von 0,2 bis 8 °P aufweist; und
wobei das Isomerisierungssubstrat (I) einen pH-Wert von wenigstens 5,6, vorzugsweise wenigstens 7,0, aufweist;
(b) Einstellen einer Temperatur (TG) des in Schritt (a) erhaltenen Gemischs (G) auf eine Temperatur innerhalb eines Temperaturbereichs (TB), welcher die Temperaturen von 15 °C unterhalb bis 2 °C unterhalb einer Temperatur (TMAX) umfasst, welche die Würze (W) während der thermischen Behandlung derselben im Bierbereitungsverfahren höchstens erreicht;
(c) Halten der Temperatur (TG) des in Schritt (b) erhaltenen Gemischs (G) für eine vorbestimmte Zeitdauer (tI) innerhalb des Temperaturbereichs (TB); wobei die Zeitdauer (tI) um 20 bis 50 min länger ist als eine Zeitdauer (tK) der thermischen Behandlung der Würze (W) im Bierbereitungsverfahren; und
(d) vorzugsweise wenigstens teilweises Abtrennen von Feststoffen aus dem in Schritt (c) erhaltenen Gemisch (G).

2. Verfahren nach Anspruch 1, **dadurch gekennzeichnet, dass** das Isomerisierungssubstrat (I) und/oder das Gemisch (G) wenigstens während der thermischen Behandlung der Würze (W) im Bierbereitungsverfahren von der Würze (W) getrennt ist/sind; und/oder
das Isomerisierungssubstrat (I) und/oder das Gemisch (G) wenigstens während einer der Schritte (a) bis (d), vorzugsweise wenigstens während des Schrittes (c), von der Würze (W) getrennt ist/sind.

3. Verfahren nach Anspruch 1 oder 2, **dadurch gekennzeichnet, dass** wenigstens einer der Schritte (a) bis (d), vorzugsweise wenigstens der Schritt (c), in einem separaten Behälter durchgeführt wird/werden, der nicht für die thermische Behandlung der Würze (W) im Bierbereitungsverfahren verwendet wird.

4. Verfahren nach einem der Ansprüche 1 bis 3, **dadurch gekennzeichnet, dass** wenigstens während einer der Schritte (a) bis (d), vorzugsweise wenigstens während des Schrittes (c), das Gemisch (G) ausdampfen gelassen wird;
wobei das Ausdampfen des Gemisches (G) gegen den Umgebungsdruck oder gegen einen Druck unterhalb des Umgebungsdrucks erfolgt.

5. Verwendung des aus Schritt (c) oder (d) des Verfahrens nach einem der Ansprüche 1 bis 4 erhaltenen Gemischs (G) zur Hopfung eines Zwischen- oder Enderzeugnisses (ZW) des Bierbereitungsverfahrens, vorzugsweise der Würze (W).

6. Verwendung nach Anspruch 5, **dadurch gekennzeichnet, dass** der Feststoffgehalt des Zwischen- oder Enderzeugnisses (ZW) des Bierbereitungsverfahrens vor der Zugabe des Gemischs (G), vorzugweise durch Sedimentieren, Zentrifugieren oder Filtrieren, verringert wurde.

7. Vorrichtung (V) zum Isomerisieren von Bestandteilen eines Hopfensubstrats (H) in einem Bierbereitungsverfahren, welches eine Erzeugung und eine thermische Behandlung einer Würze (W) einschließt, vorzugsweise zum Durchführen wenigstens eines der Schritte (a), (b), (c) und (d) des Verfahrens nach einem der Ansprüche 1 bis 4, aufweisend:
einen Behälter (B) zur Aufnahme des Hopfensubstrats (H), des Isomerisierungssubstrats (I) und/oder eines Gemischs (G) aus dem Hopfensubstrat (H) und dem Isomerisierungssubstrat (I);
wobei der Behälter (B) wenigstens eine Einlassöffnung (E) zum Einbringen des Hopfensubstrats (H), des Isomerisierungssubstrats (I) und/oder des Gemisches (G) in den Behälter (B) aufweist;
wobei der Behälter (B) wenigstens eine Auslassöffnung (A) zum Ausbringen des Gemisches (G) aus dem Behälter (B) aufweist;
ein Dunstrohr (D) zum Abführen von aus dem Gemisch (G) stammenden Dampf oder Dunst aus dem Behälter (B);
eine Einrichtung (WG) zum Einstellen der Temperatur (TG) des Gemischs (G) oder des Isomerisierungssubstrats (I);
wobei die Einlassöffnung (E) oder wenigstens eine der Einlassöffnungen (E) mit einer Läutervorrichtung in Fluidverbindung steht;
wobei die Auslassöffnung (A) oder wenigstens eine der Auslassöffnungen (A) mit einem ein Zwischen- oder Enderzeugnis (ZW) des Bierbereitungsverfahrens führenden, vorzugsweise würze- oder bierführenden, Gefäß (L) in Fluidverbindung steht, wobei das Gefäß (L) bezogen auf einen Würzestrom stromabwärts zu einer Einrichtung zum wenigstens teilweisen Abtrennen von Feststoffen aus der Würze (W), vorzugweise durch Sedimentieren, Zentrifugieren oder Filtrieren, insbesondere zu einem Whirlpool, angeordnet ist;
**dadurch gekennzeichnet, dass**
der Behälter (B) oder ein Teil desselben die Gestalt eines Kegels oder Stumpfkegels aufweist, wobei der Öffnungswinkel (α) des Kegels oder Stumpfkegels im Bereich von 15 bis 120 ° liegt.

8. Vorrichtung (V) nach Anspruch 7, **dadurch gekennzeichnet, dass** der Behälter (B) geeignet ist, in seinem Inneren einem Druck unterhalb des Umgebungsdrucks standzuhalten; und
vorzugsweise eine Einrichtung zur Erzeugung eines Drucks unterhalb des Umgebungsdrucks im Inneren des Behälters (B) aufweist.

## Claims

1. Method for isomerizing components of a hop substrate (H) in a beer manufacturing method, which includes a manufacturing and a thermal treatment of a wort (W), having the steps:
(a) mixing of the hop substrate (H) with an isomerization substrate (I), thereby obtaining a mixture (G);
wherein the hop substrate (H) contains at least one isomerizable hop component, preferably at least one α acid and/or at least one β acid;
wherein the isomerization substrate (I) contains a lauter wort or consists thereof;
wherein the isomerization substrate (I) has an extract content in the range of 0.2 to 8 °P; and
wherein the isomerization substrate (I) has a pH value of at least 5.6, preferably at least 7.0;
(b) setting a temperature (TG) of the mixture (G) obtained in step (a) to a temperature within a temperature range (TB), which includes the temperatures from 15 °C below to 2 °C, preferably from 15 °C below to 5 °C, below a maximum temperature (TMAX) attained by the wort (W) during the thermal treatment of the same in the beer manufacturing method;
(c) maintaining the temperature of the mixture (G) obtained in step (b) within the range (TB) for a predetermined period of time (tI);
wherein the period of time (tI) is longer by 20 to 50 minutes than a period of time (tK) of the thermal treatment of the wort (W) in the beer manufacturing method; and
(d) preferably, at least partly separating of solid components from the mixture (G) obtained in step (c).

2. Method according to claim 1, **characterized in that** the isomerization substrate (I) and/or the mixture (G) is/are separated from the wort (W) at least during the thermal treatment of the wort (W); and/or
the isomerization substrate (I) and/or the mixture (G) is/are separated from the wort (W) at least during one of the steps (a) to (d), preferably at least during the step (c).

3. Method according to claim 1 or 2, **characterized in that** at least one of the steps (a) to (d), preferably at least a step (c), is/are carried out in a separate container, which is not used for the thermal treatment of the wort (W) in the beer manufacturing method.

4. Method according to one of claims 1 to 3, **characterized in that** at least during one of the steps (a) to (d), preferably at least during step (c), the mixture (G) is allowed to evaporate;
wherein the evaporation of the mixture (G) is carried out against the atmospheric pressure or against a pressure below the atmospheric pressure.

5. Use of the mixture (G) obtained in step (c) or (d) of the method according to one of claims 1 to 4, for hopping an intermediate or final product (ZW) of the beer manufacturing method, preferably the wort (W).

6. Use of claim 5, **characterized in that** the solid matter content of the intermediate or final product (ZW) of the beer manufacturing method was reduced prior to the addition of the mixture (G), preferably by sedimentation, centrifugation or filtration.

7. Device (V) for isomerizing of components of a hop substrate (H) in a beer manufacturing method, which includes a manufacturing and a thermal treatment of a wort (W), preferably for conducting at least one of the steps (a), (b), (c), and (d) of the method according to one of claims 1 to 4, comprising:
a container (B) for receiving the hop substrate (H), the isomerization substrate (I) and/or a mixture (G) containing the hop substrate (H) and the isomerization substrate (I);
wherein the container (B) has at least one inlet opening (E) for introducing the hop substrate (H), the isomerization substrate (I) and/or the mixture (G) into the container (B);
wherein the container (B) has at least one outlet opening (A) for withdrawing the mixture (G) from the container (B);
an outlet vent (D) for discharging of steam or mist of the mixture (G) from the container (B);
an apparatus (WG) for setting the temperature (TG) of the mixture (G) or of the isomerization substrate (I);
wherein the inlet opening (E) or at least one of the inlet openings (E) is in fluid connection with a lauter device;
wherein the outlet opening (A) or at least one of the outlet openings (A) is in fluid connection with a vessel (L) which carries an intermediate or final product (ZW) of the beer manufacturing method, preferably beer or wort;
wherein the vessel (L) is arranged downstream of an apparatus for at least partially separating the solid matter from the wort (W), preferably by sedimentation, centrifugation or filtration, in particular of a whirlpool, with respect to the wort flow;
**characterized in that**
the container (B) or a part thereof has the shape of a cone or truncated cone;
wherein the opening angle (α) of the cone or truncated cone is in the range from 15 to 120 °.

8. Device (V) according to claim 7, **characterized in that** the container (B) is suitable to stand a pressure of its inner space, which is below the ambient pressure; and preferably has a device for producing a pressure in the inner space of the container (B), which is below the ambient pressure.

## Revendications

1. Procédé destiné à l'isomérisation de constituants d'un substrat de houblon (H) dans un procédé de préparation de la bière, qui englobe une fabrication et un traitement thermique d'un moût (W), comprenant les étapes dans lesquelles :
(a) on mélange le substrat de houblon (H) avec un substrat d'isomérisation (I) pour obtenir un mélange (G) ;
dans lequel le substrat de houblon (H) contient au moins un constituant de houblon isomérisable, de préférence au moins un alpha-acide ;
dans lequel le substrat d'isomérisation (I) contient un moût que l'on obtient après filtration ou est constitué de ce dernier ;
dans lequel le substrat d'isomérisation (I) présente une teneur en extrait dans la plage de 0,2 à 8 °P ; et
dans lequel le substrat d'isomérisation (I) présente une valeur de pH s'élevant à au moins 5,6, de préférence à au moins 7,0 ;
(b) on règle une température (TG) du mélange (G) que l'on a obtenu à l'étape (a) à une température qui se situe au sein d'une plage de températures (TB) qui comprend les températures de 15 °C en dessous jusqu'à 2 °C en dessous d'une température (TMAX) qu'atteint le moût (W) au maximum au cours du traitement thermique de ce dernier dans le procédé de préparation de la bière ;
(c) on maintient la température (TG) du mélange (G) que l'on a obtenu à l'étape (b) pendant un laps de temps prédéterminé (tl) au sein de la plage de températures (TB) ;
dans lequel le laps de temps (tl) est supérieur à concurrence de 20 à 50 minutes à un laps de temps (tK) du traitement thermique du moût (W) dans le procédé de préparation de la bière ; et
(d) de préférence, on sépare au moins en partie les substances solides du mélange (G) que l'on a obtenu à l'étape (c).

2. Procédé selon la revendication 1, **caractérisé en ce que** l'on sépare du moût (W), au cours du procédé de préparation de la bière, le substrat d'isomérisation (I) et/ou le mélange (G) au moins pendant le traitement thermique du moût ; et/ou
on sépare du moût (W), au moins au cours d'une des étapes (a) à (d), de préférence au moins au cours de l'étape (c), le substrat d'isomérisation (I) et/ou le mélange (G).

3. Procédé selon la revendication 1 ou 2, **caractérisé en ce que** l'on met en oeuvre au moins une des étapes (a) à (d), de préférence au moins l'étape (c), dans un récipient séparé qui n'est pas utilisé pour le traitement thermique du moût (W) dans le procédé de préparation de la bière.

4. Procédé selon l'une quelconque des revendications 1 à 3, **caractérisé en ce qu'**on laisse le mélange (G) s'évaporer au moins au cours de l'une des étapes (a) à (d), de préférence au moins au cours de l'étape (c) ;
dans lequel l'évaporation du mélange (G) a lieu à l'encontre de la pression ambiante ou à l'encontre d'une pression inférieure à la pression ambiante.

5. Utilisation du mélange (G) que l'on obtient à partir de l'étape (c) ou (d) du procédé selon l'une quelconque des revendications 1 à 4 pour le houblonnage d'un produit intermédiaire ou d'un produit fini (ZW) du procédé de préparation de la bière, de préférence du moût (W).

6. Utilisation selon la revendication 5, **caractérisée en ce que** la teneur en substances solides du produit intermédiaire ou du produit fini (ZW) du procédé de préparation de la bière a été réduit avant l'addition du mélange (G), de préférence par sédimentation, par centrifugation ou par filtration.

7. Dispositif (V) destiné à l'isomérisation de constituants d'un substrat de houblon (H) dans un procédé de préparation de la bière, qui englobe une fabrication et un traitement thermique d'un moût (W), de préférence pour la mise en oeuvre d'au moins une des étapes (a), (b), (c) et (d) du procédé selon l'une quelconque des revendications 1 à 4, qui présente :
un récipient (B) pour la réception du substrat de houblon (H), du substrat d'isomérisation (I) et/ou d'un mélange (G) du substrat de houblon (H) et du substrat d'isomérisation (I) ;
dans lequel le récipient (B) présente au moins une ouverture d'entrée (E) pour l'introduction du substrat de houblon (H), du substrat d'isomérisation (I) et/ou du mélange (G) dans le récipient (B) ;
dans lequel le récipient (B) présente au moins une ouverture de sortie (A) pour l'évacuation du mélange (G) hors du récipient (B) ;
une buse d'aérage (D) destinée à l'évacuation hors du récipient (B) de la vapeur ou de la brume émanant du mélange (G) ;
un mécanisme (WG) destiné au réglage de la température (TG) du mélange (G) ou du substrat d'isomérisation (I) ;
dans lequel l'ouverture d'entrée (E) ou au moins une des ouvertures d'entrée (E) est mise en communication par fluide avec un dispositif de filtration ;
dans lequel l'ouverture de sortie (A) ou au moins une des ouvertures de sortie (A) est mise en liaison par fluide avec une cuve (L) qui guide un produit intermédiaire ou un produit fini (ZW) du procédé de préparation de la bière, de préférence qui guide le moût ou la bière ; dans lequel la cuve (L) est disposée, par rapport à un courant de moût, en aval d'un mécanisme destiné à la séparation au moins partielle des substances solides à partir du moût (W), de préférence par sédimentation, centrifugation ou filtration, en particulier d'un bac à moût tourbillonnaire ;
**caractérisé en ce que**
le récipient (B) ou une partie de ce dernier présente une configuration en forme de cône ou de forme tronconique ; dans lequel l'angle d'ouverture (a) du cône ou du cône tronqué se situe dans la plage de 15 à 120°.

8. Dispositif (V) selon la revendication 7, **caractérisé en ce que** le récipient (B) est approprié pour maintenir en son sein une pression inférieure à la pression ambiante ; et
de préférence présente un mécanisme pour générer une pression qui est inférieure à la pression ambiante à l'intérieur du récipient (B).
